# EUROPEAN PATENT SPECIFICATION

(11) **EP 0 295 915 B1**
(45) Date of publication and mention of the grant of the patent: **04.05.1994**
(21) Application number: 88305508.9
(22) Date of filing: 16.06.1988
(51) Int. Cl.: G01N 21/73, G01N 30/86

(54) **Improved method and scavenger gas for the analysis of oxygen-containing components using atomic emission spectrometry**
Verbessertes Verfahren und zusätzliches Gas zur Analyse von Sauerstoff enthaltenden Gasen, mittels der Atomemissionspektrometrie
Méthode amélioré et gaz additionel pour l'analyse de composés contenant de l'oxygène, utilisant la spectrométrie d'émission atomique

(30) Priority: 18.06.1987 US 64041
(43) Date of publication of application: 21.12.1988
(73) Proprietor: Hewlett-Packard Company, Palo Alto, California 94304 (US)
(72) Inventor: Quimby, Bruce D., Landenberg, PA 19350 (US); Sullivan, James J., Newark Delaware 19713 (US)
(74) Representative: Williams, John Francis

(56) References cited:
- FR-A- 2 090 825
- FR-A- 2 245 946
- GB-A- 1 258 403
- US-A- 4 293 220
- JOURNAL OF CHROMATOGRAPHY vol. 355, 1986, pages 117-126, Amsterdam, NL; K.J. SLATKAVITZ et al.: "Consideration of an atomospheric pressure microwave-induced helium plasma as an oxygen-selective gas chromatographic detector"
- ANALYTICAL CHEMISTRY vol. 58, no. 3, March 1986, pages 642-647, Washington, USA; E.E. KING et al.: "Sample pair modulation studies of molecular fragmentation in plasmas"

## Description

The present invention relates to the use of atomic emission spectrometry for the element-specific analysis of a sample, preferably a fractionated sample eluted from a separation means such as a gas chromatograph. More particularly, the invention relates to the use of an improved reagent (or scavenger) gas which provides increased selectivity for oxygen detection.

Atomic emission spectrometers equipped with plasma-excitation means are commonly used in many applications of chemical analysis for quantitative determination of the presence of particular elements in a multi-component sample. The spectrometers are also used in the analysis of the fractionated effluent from a separatory device such as a gas chromatograph (GC). In that function, the atomic emission line for the desired element is monochromatically monitored and plotted as a function of time, correlatable with the period of time over which the various components of the fractionated sample pass through the plasma-forming stage of the spectrometer. The utility of this analytical technique, particularly in such applications as the monitoring of environmental pollutants, is critcally dependent on the use of the spectrometer that is hightly element-selective.

As used herein, the "selectivity" of a spectrometer or detector is the ability of the detector to reject a response from compounds not containing the specific element of interest. Selectivity is normally expressed as the ratio of the mass of a compound not containing the selected element necessary to produce the same chromatographic response as a mass of a compound that does contain that element.

The selectivity in atomic emission spectrometry is as high as 10,000 for most elements, provided the specific detector used has sufficiently high resolution and is capable of filtering spectral background "noise" (interfering signals from, for example, molecular emissions). The selectivity for oxygen, however, has been considerably lower than this with the analytical equipment and methods of the prior art. For example, in atomic emission spectrometry using atmospheric pressure microwave-induced helium plasma, oxygen normally exhibits selectivity of only about 10, which is too low to allow proper distinction between oxygenated and non-oxygenated hydrocarbons.

Improvements in the results available for atomic emission spectrometry in general have been made through the use of reagent (or scavenger) gases, which are usually injected into the stream of carrier gas (generally helium), which entrains the sample just before the inlet to the spectrometer. Reagent gases are used to prevent the deposition of soot on the lamp or discharge tube, which is a particular problem when carbon or sulfur compounds are in the sample to be analyzed. The most commonly used reagent gases have been oxygen, hydrogen, and nitrogen, the choice of the particular reagent for use being dependent upon its absence in the sample compounds of interest to avoid the production of background noise. U.S. Patent 3,887, 280, for example, discloses the individual use of each of these gases in the elemental analysis of a carbon-containing sample.

In the particular case of the detection of oxygen-containing compounds, for example, it has been reported that oxygen-to-carbon selectivity in spectrometers operating at atmospheric pressure with microwave-induced helium plasma can be increased by using hydrogen as the reagent gas. See Slatkavitz et al, Journal of Chromatography, 355 (1986), 117-126. More particularly, it is disclosed that the addition of about 0.1-0.4 volume percent hydrogen based on the helium flow-rate, provides improved peak shape through reduction of anomalous "negative" responses. Nevertheless, oxygen selectivity is not reported to approach the levels generally achieved for other elements, and it is also indicated that negative responses are still obtained because of background oxygen which is often present as an impurity in the helium or which enters the system through air leaks. This document corresponds to the introductory part of claim 1.

Accordingly, there remains a need for atomic emission spectrometry having improved selectivity for oxygen.

U.S. 4,293,220 discloses a method of using a carbon-containing gas to aid in the detection of carbon and a number of other elements.

The present invention seeks to provide an improved method of elemental analysis of a sample which includes an oxygen-containing compound.

According to the present invention there is provided a method of elemental analysis of a sample which includes an oxygen-containing compound, comprising the steps of introducing a mixture of the sample, an inert carrier gas therefor, and a reagent gas into an atomic emission spectrometer having plasma- excitation means, forming a plasma from said mixture, and detecting at least one oxygen or oxygen-related optical emission generated thereby, characterised in that prior to introducing the mixture into the spectrometer there is introduced into the mixture a controlled amount of a carbon-containing gas which remains in said mixture during plasma formation and said optical emission detection.

In preferred embodiments said carbon-containing gas is a C₁-C₄ hydrocarbon gas or mixture of C₁-C₄ hydrocarbon gases.

In preferred embodiments, the carbon-containing gas is introduced with the basic reagent gas and replaces a portion of the reagent gas on a v/v basis. In most preferred embodiments, the reagent gas, as modified by the introduction of the carbon-containing gas, comprises nitrogen, hydrogen, or mixtures of these and up to about 20 volume percent of methane, propane, propylene, or n- butane.

The method of the present invention substantially enhances the capability to selectively detect oxygenated compounds, the importance thereof being highlighted by the fact that oxygen is the third most prevalent element (carbon and hydrogen being more abundant) in known organic compounds. A further advantage of the present invention is its applicability to existing equipment for atomic emission detection. No substantial modification of such equipment is necessary, and the invention can otherwise be practised, and its benefits achieved, with standard spectrometers.

Preferred embodiments of the present invention will now be described, by way of example only, with reference to the accompanying drawings, of which:
Figure 1 ia a sulphur-specific chromatogram, using oxygen as a reagent gas, of a fractionated sample of known composition.
Figure 2 is a carbon-specific chromatogram, using oxygen as a reagent gas, of the sample of Figure 1.
Figure 3 is an oxygen-specific chromatogram, using nitrogen as a reagent gas, of the sample of Figure 1.
Figure 4 is an oxygen-specific chromatogram, using hydrogen as a reagent gas, of the sample of Figure 1.
Figure 5 is an oxygen-specific chromatogram of a sample of Figure 1 using a 99/1 v/v mixture of hydrogen and propane as a reagent gas.

The present invention provides an improvement in the use of atomic emission spectrometry for chemical analysis by which the oxygen selectivity of the analysis is greatly enhanced. More particularly, the invention is based on the improved oxygen selectivity obtained by the introduction of a carbon-containing gas, preferably non-oxygenated, as a portion of the reagent gas that normally accompanies the sample into the plasma-forming chamber of the spectrometer.

In the performance of atomic-emission analyses of the kind to which the present invention pertains, the sample to be analyzed and a carrier gas for that sample are directed into an atomic emission spectrometer equipped with apparatus to generate a plasma from the carrier gas and sample. The invention is particularly useful in the analysis of the fractionated effluent from a separatory device such as a gas chromatograph (GC), and the invention will hereafter be described in terms of this preferred embodiment, although it is to be understood that it is equally applicable to the analysis of an unfractionated single-component or unfractionated multi-component sample as well. With the use of such a separatory device, the effluent is directed into an atomic emission spectrometer equipped to generate a plasma from the effluent. By means of the spectrometer, the atomic emission line of the desired element within the sample is monitored and generally correlated with the passage of the various compounds contained in the fractionated sample through the plasma-forming stage of the spectrometer. Carrier gases in general use are inert gases such as helium, argon, and neon. The plasma can be generated by subjecting the gas to, for example, microwave radiation. Microwave induction of helium plasma is preferred according to the present invention.

In general practice, the hardware connection between the gas-separation device and the spectrometer is generally equipped with means for introducing a reagent gas and additional carrier gas (known a make-up gas) into the effluent of the separatory device prior to that stream's entering the spectrometer. Although these gases can be introduced into the effluent through separate ports in the effluent line, they are usually and preferably pre-combined in a common feed line and injected through a single port. The make-up gas is used primarily to maintain the effluent pressure sufficiently above atmospheric pressure to provide proper flow to the spectrometer, the plasma-forming step of which is preferably at or just above atmospheric pressure. The reagent gas and make-up gas can each be bled into the common feed line through, for example, an adjustable pressure valve or controller.

In general practice and for purposes of the present invention, flow rates of the sample plus carrier gas through a gas chromatograph vary from as little as about 0.5 ml/min (calculated at standard conditions) to as much as about 50 ml/min. The make-up gas is added to the column effluent in an amount of about 10-50 ml/min to provide a v/v ratio with the effluent in the range of about 1.0-20.0. The reagent gas is generally added in an amount sufficient to provide about 0.05-2.0 volume percent, preferably about 0.1-1.5 volume percent, of the total gas entering the plasma.

According to the present invention, the oxygen selectivity of an analytical system of the kind described above is enhanced when a controlled amount of a carbon-containing gas is introduced into the gas mixture from which the plasma is formed. Preferably the carbon-containing gas is introduced as a portion of the basic reagent gas. For the detection of oxygen-containing compounds, the reagent gas is normally nitrogen and/or hydrogen. It has been found that generally any carbon-containing gas can be used in conjunction with the basic nitrogen or hydrogen reagent gas with good results. It is preferred that the carbon-containing gas not include oxygen, although gases generated from organic compounds of low oxygen content, such as those having a carbon-to-oxygen atomic ratio of at least about 8:1, can be used. Long-chain mono-alcohols are examples of such compounds. Most preferred gases are C₁-C₄ hydrocarbon gas such as methane, ethane, ethylene, propane, propylene, n-butane, iso-butane, or butylene.

The amount of carbon-containing gas used according to the invention will vary depending upon the concentrations of any oxygenated impurities in the gases entering the plasma. Most preferably, the carbon-containing gas is introduced in an amount just below that at which carbon soot begins to deposit on the discharge tube of the atomic emission detector. This level usually must be determined empirically before each run because of the effect on soot-deposition rate of such factors as the overall gas flow rate and the possible presence of other soot-inhibiting compounds in the stream. Generally, however, it has been found that providing the carbon-containing gas in an amount of about 0.005-1.0 volume percent of the total gas entering the plasma is effective. In the preferred embodiment of the invention, the carbon-containing gas is introduced into the system as a replacement for up to about 50 volume percent, more preferably 0.1-20 volume percent, of the generally-used amount of hydrogen or nitrogen reagent gas, as described above. Most preferably, about 1.0-10.0 volume percent of the basic reagent gas is replaced by the carbon-containing gas.

In operation, the carbon-containing gas can be introduced into the mixture from which the plasma is to be generated at any point in the system. It is important only that the flow of the gas be controlled to be within the effective range. Most preferably, the carbon-containing gas and the basic nitrogen and/or hydrogen reagent gas are metered and bled into a common feed line which, in turn, is combined with the make-up gas as earlier described. Any conventional means for metering the flow of gas, such as those combining adjustable pressure controllers and flow restrictors, can be used so long as the flow of carbon-containing gas is controllable and can be maintained within the effective concentration.

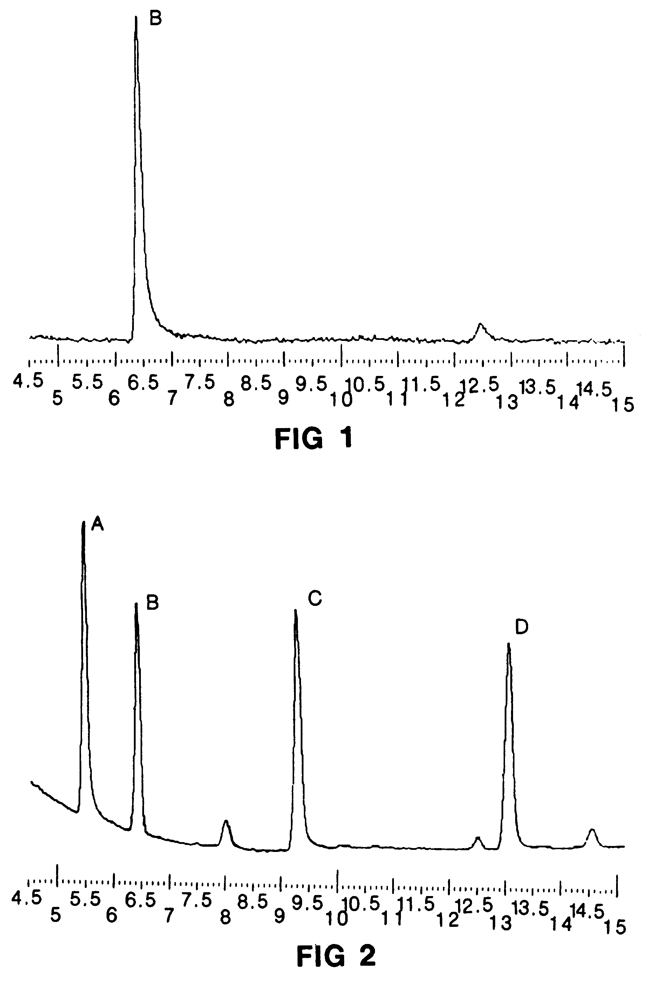

The present invention is illustrated by reference to FIGURES 1-5, which depict a comparative study of the chromatograms generated by a known sample mixture both with and without the improved scavenger gas. The mixture on which the study was conducted consisted of nitro-benzene (Compound "A" in the figures), t-butyl disulfide ("B"), n-dodecane ("C"), and n-tridecane ("D") in a carrier gas of helium. Apparatus used in the study included a Hewlett Packard 5890A Gas Chromatograph with dedicated on-column injection, and a laboratory-built spectrometer having a 0.5m, f/8 concave grating mount and equipped with a solvent-dumping means as described in U.S. Patent 4,517,824. Operating conditions for the GC-AED study and summarized in the following table.

| GC-AED Operating Conditions | |
|---|---|
| Chromatographic Conditions | |
| Column | 12m cross-linked 5% phenyl methyl silicon (0.53 mm I.D.; 0.88 µm film thickness) |
| Helium flow-rate | 8 ml/min (research grade purity) |
| Injection size | 1 µl |
| Column temperature | 65°C to 200°C at 10°C/min (programmed) |
| Detection interface temperature | 250°C |

| Spectroscopic Conditions | |
|---|---|
| Microwave plasma cavity | Modified TM₀₁₀ (with water-cooled discharge tube) at atmospheric pressure |
| Tuning device | Coaxial stubstretcher |
| Power | 120 W at 2450 MHz |
| Helium flow-rate | 50 ml/min (8 ml/min from column; 42 ml/min make-up) |
| Reagent gas flow-rate | 0.5 ml/min |

| Element detection wavelength | |
|---|---|
| Oxygen | 777.2 nm |
| Carbon | 193.1 nm |
| Sulfur | 180.7 nm |
| Spectral resolution | 0.075 nm |
| Entrance slit | 60.0 µm (width) by 5 mm (height) |
| Computer | Hewlett Packard Model 9836 |
| Plotter | Hewlett Packard Model 2673A |
| Photodetector | 212 pixel linear photodiode array, pixel size 60 x 600 µm |

FIGURE 1 is a sulfur chromatogram of the sample mixture and FIGURE 2 is a carbon chromatogram of the same mixture taken simultaneously at the carbon-detection wavelength. The reagent gas used in the generation of each of these control chromatograms was oxygen, about 1% by volume of total gas. As can be seen, all compounds generate sharp responses at the carbon wavelength (FIGURE 2), and the selectivity for the sulfur channel alone is shown in FIGURE 1 to be excellent, the only responses being to the single sulfur-containing compound (B) and a sulfur-containing impurity, which eluted at about 12.5 minutes. There is no detectable response from any of the non-sulfur containing compounds in the mixture.

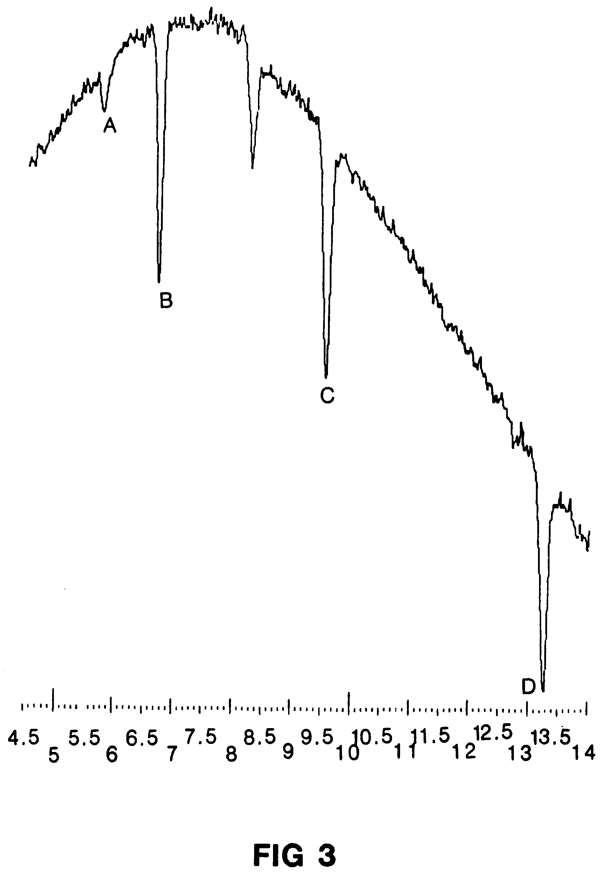

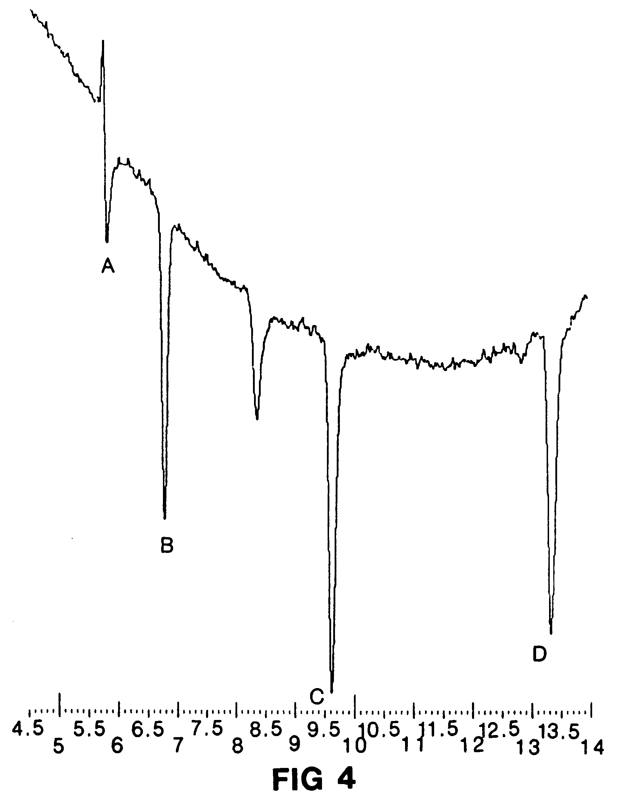

FIGURES 3 and 4 are the oxygen chromatograms for the test mixture plotted at the oxygen wavelength using nitrogen and hydrogen, respectively, as the reagent gases at a concentration of about 1% by volume (about 0.5 ml/min) of the total helium entering the detector. These control chromatograms demonstrate the poor oxygen selectivity of existing spectrometry methods. All compounds in the mixture produce significant anomalous responses in each chromatogram (either negative peaks or zig-zag positive/negative peaks as predicted by Slatkavitz et al), demonstrating the uselessness, for practical purposes, of standard techniques for oxygen analysis.

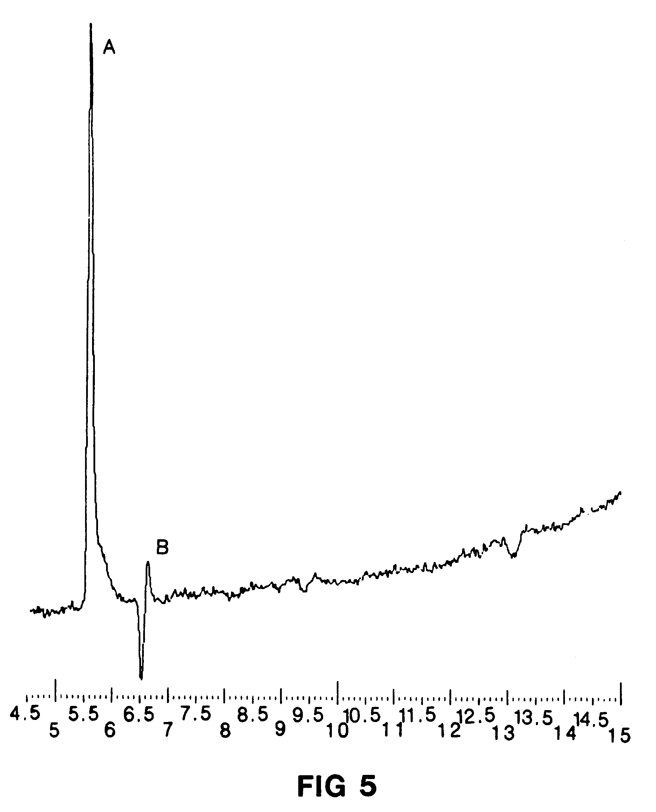

The use of the improved reagent gas of the present invention is shown in FIGURE 5. The chromatogram of FIGURE 5 depicts analysis of the sample mixture of FIGURES 3 and 4 using as the reagent gas a mixture of hydrogen and propane in a v/v ratio of about 99/1 (about 0.5 ml/min hydrogen mixed with about 0.005 ml/min propane), providing a total reagent gas concentration of about 1.0% by volume. The response to the single oxygenated target compound of the mixture, Compound A, is positive and strong. Comparison to either of FIGURES 3 or 4 shows that responses to the non-oxygenated target compounds are substantially reduced or eliminated.

## Claims

1. A method of elemental analysis of a sample which includes an oxygen-containing compound, comprising the steps of introducing a mixture of the sample, an inert carrier gas therefor, and a reagent gas into an atomic emission spectrometer having plasma-excitation means, forming a plasma from said mixture, and detecting at least one oxygen or oxygen-related optical emission generated thereby, characterised in that prior to introducing the mixture into the spectrometer there is introduced into the mixture a controlled amount of a carbon-containing gas which remains in said mixture during plasma formation and said optical emission detection.

2. A method as claimed in claim 1, wherein said carbon-containing gas is introduced as a portion of the reagent gas.

3. A method as claimed in claim 1 or 2, in which the reagent gas comprises hydrogen and/or nitrogen and up to about 50% by volume of said carbon-containing gas.

4. A method as claimed in claim 3, in which the reagent gas comprises hydrogen and/or nitrogen, and about 0.1-20 volume percent of said carbon-containing gas.

5. The method of claim 4 in which the reagent gas comprises hydrogen and/or nitrogen and about 1.0-10.0 volume percent of said carbon-containing gas.

6. A method as claimed in any preceding claim wherein said carbon-containing gas is non-oxygenated.

7. A method as claimed in any preceding claim wherein said carbon-containing gas is a C₁-C₄ hydrocarbon gas or mixture of C₁-C₄ hydrocarbon gases.

8. A method as claimed in claim 7, in which said carbon-containing gas is propane or n-butane.

9. A method as claimed in any preceding claim, wherein the sample has been fractionated in a gas chromatograph before being introduced in said mixture.

10. A method as claimed in claims 7 and 9 comprising forming said plasma by microwave induction, and wherein the gas is introduced into said mixture after fractionisation of said sample in an amount just below that at which soot begins to deposit on the discharge tube of said atomic emission detector.

## Patentansprüche

1. Verfahren zur Elementaranalyse einer Probe, die eine sauerstoffhaltige Verbindung enthält, mit den Verfahrensschritten: Einführen einer Mischung aus der Probe, einem inerten Trägergas für diese und einem Reagenzgas in ein Atomemissionsspektrometer mit einer Plasma-Anregungsvorrichtung, Bilden eines Plasmas aus der Mischung und Erfassen mindestens einer optischen Sauerstoffemission oder sauerstoffverwandten Emission, dadurch gekennzeichnet, daß vor dem Einführen der Mischung in das Spektrometer der Mischung eine kontrollierte Menge eines kohlenstoffhaltigen Gases zugeführt wird, das während der Plasmabildung und der Lichtemissionserfassung in der Mischung bleibt.

2. Verfahren nach Anspruch 1, bei dem das kohlenstoffhaltige Gas als ein Teil des Reagenzgases zugeführt wird.

3. Verfahren nach Anspruch 1 oder 2, bei dem das Reagenzgas Wasserstoff und/oder Stickstoff und bis zu etwa 50 Vol.-% des kohlenstoffhaltigen Gases aufweist.

4. Verfahren nach Anspruch 3, bei dem das Reagenzgas Wasserstoff und/oder Stickstoff und etwa 0,1 - 20 Vol.-% des kohlenstoffhaltigen Gases aufweist.

5. Verfahren nach Anspruch 4, bei dem das Reagenzgas Wasserstoff und/oder Stickstoff und etwa 1,0 - 10,0 Vol.-% des kohlenstoffhaltigen Gases aufweist.

6. Verfahren nach einem der vorangehenden Ansprüche, bei dem das kohlenstoffhaltige Gas nicht sauerstoffangereichert ist.

7. Verfahren nach einem der vorangehenden Ansprüche, bei dem das kohlenstoffhaltige Gas ein C₁ - C₄ Kohlenwasserstoffgas oder eine Mischung aus C₁ - C₄ Kohlenwasserstoffgasen ist.

8. Verfahren nach Anspruch 7, bei dem das kohlenstoffhaltige Gas Propan oder N-Butan ist.

9. Verfahren nach einem der vorangehenden Ansprüche, bei dem die Probe vor dem Einführen in die Mischung in einem Gaschromatographen fraktioniert wird.

10. Verfahren nach Anspruch 7 und 9, bei dem das Plasma durch Mikrowelleninduktion gebildet wird und bei dem das Gas in die Mischung nach der Fraktionierung der Probe in einer Menge eingeführt wird, die gerade unterhalb der Menge liegt, bei der Ruß sich an der Entladeröhre des Atomemissionsdetektors abzulagern beginnt.

## Revendications

1. Un procédé d'analyse élémentaire d'un échantillon qui inclut un composé contenant de l'oxygène, comprenant les étapes consistant à introduire dans un spectromètre d'émission atomique un mélange de l' échantillon , d'un gaz porteur inerte pour celui-ci , et d'un gaz réactif, former un plasma à partir dudit mélange, et détecter au moins l'émission optique d'oxygène ou liée à l'oxygène engendré par celui-ci, caractérisé en ce qu'il est introduit dans le mélange, avant d'introduire le mélange dans le spectromètre, une quantité réglée d'un gaz contenant du carbone qui reste dans ledit mélange pendant la formation du plasma et ladite détection d'émission optique.

2. Un procédé selon la revendication 1, dans lequel ledit gaz contenant du carbone est introduit en tant que partie du gaz réactif.

3. Un procédé selon la revendication 1 ou 2, dans lequel le gaz réactif comprend de l'hydrogène et/ou de l'azote et jusqu'à environ 50% en volume dudit gaz contenant du carbone.

4. Un procédé selon la revendication 3 dans lequel le gaz réactif comprend de l'hydrogène et/ou de l'azote et environ 0,1 à 20 % en volume dudit gaz contenant du carbone.

5. Le procédé selon la revendication 4 dans lequel le gaz réactif comprend de l'hydrogène et/ou de l'azote et environ 1,0 à 10,0 % en volume dudit gaz contenant du carbone.

6. Un procédé selon une revendication précédente quelconque dans lequel ledit gaz contenant du carbone est non oxygéné.

7. Un procédé selon une revendication précédente quelconque dans lequel ledit gaz contenant du carbone est un hydrocarbure gazeux C₁ à C₄ ou un mélange d'hydrocarbures gazeux C₁ à C₄.

8. Un procédé selon la revendication 7, dans lequel ledit gaz contenant du carbone est du propane ou du n-butane.

9. Un procédé selon un revendication précédente quelconque, dans lequel l'échantillon a été fractionné dans un chromatographe en phase gazeuse avant d'être introduit dans ledit mélange.

10. Un procédé selon les revendications 7 et 9, comprenant la formation dudit plasma par induction de micro-ondes, et dans lequel le gaz est introduit dans ledit mélange après fractionnement dudit échantillon en une quantité immédiatement inférieure à celle pour laquelle de la suie commence à se déposer sur le tube de décharge dudit détecteur d'émission atomique.
